# FASCICULE DE BREVET EUROPEEN

(11) **EP 0 989 008 B1**
(45) Date de publication et mention de la délivrance du brevet: **26.01.2005**
(21) Numéro de dépôt: 99402181.4
(22) Date de dépôt: 03.09.1999
(51) Int. Cl.: B60J 7/047

(54) **Véhicule automobile comportant un pavillon escamotable dans une porte transversale arrière**
Kraftfahrzeug mit einem in einer querliegenden Hintertür versenkbaren Dach
Motor vehicle with retractable roof storable in a transverse rear door

(30) Priorité: 25.09.1998 FR 9812047
(43) Date de publication de la demande: 29.03.2000
(73) Titulaire: Renault s.a.s., 92100 Boulogne Billancourt (FR)
(72) Inventeur: Le Leizour, Alban, 78580 Maule (FR); Mitu, Aurel, 95000 Cergy (FR)

(56) Documents cités:
- EP-A- 0 101 322
- EP-A- 0 803 390
- DE-A- 19 616 972
- FR-A- 2 744 957

## Description

L'invention concerne un véhicule automobile découvrable.

L'invention concerne plus particulièrement un véhicule automobile dont l'habitacle est délimité par au moins une porte agencée transversalement à l'arrière de la caisse du véhicule, du type dans lequel la porte arrière comporte un panneau inférieur surmonté d'une vitre supérieure et des moyens d'articulation du panneau inférieur par rapport à la caisse du véhicule qui permettent l'ouverture de la porte arrière, du type dans lequel au moins une partie du toit de l'habitacle est constituée d'un pavillon qui s'étend sensiblement horizontalement en avant de la vitre supérieure de la porte arrière et qui est formé d'une pluralité de lamelles transversales, notamment articulées les unes par rapport aux autres, qui sont susceptibles d'être entraînées, notamment par une lamelle avant, pour coulisser longitudinalement, notamment vers l'arrière et découvrir au moins partiellement l'habitacle du véhicule, et qui sont susceptibles d'être reçues, notamment en se superposant les unes sur les autres, dans un logement agencé en arrière du toit.

Le document DE-A-196 16972 montre un toit de véhicule automobile constitué d'un pavillon comprenant des lamelles susceptibles d'être reçues entre la dernière rangé de siège et le bord de la partie arrière du véhicule.

Il existe de nombreux types de véhicules automobiles découvrables.

On connaît de longue date des véhicules découvrables comportant un toit souple ou capote, qui est susceptible de couvrir le véhicule en s'étendant sur des armatures rigides articulées, et de découvrir le véhicule lorsque ces armatures sont escamotées vers une position de rangement.

L'inconvénient majeur de ce type de véhicule est d'une part la grande vulnérabilité de la capote aux dégradations diverses dont elle peut être l'objet, qu'elles soient d'origine naturelle ou humaine, et d'autre part le relatif inconfort d'un tel toit, et ce, particulièrement pour des grandes vitesses du véhicule dans lesquelles l'ait parvient à s'infiltrer sous la capote et génère des bruits aérodynamiques gênant les passagers.

Pour remédier à cet inconvénient, on imaginé de remplacer la capote par un toit rigide démontable, aussi appelé "hard-top". Un tel toit présente des caractéristiques de rigidité et d'insonorisation satisfaisantes mais se révèle particulièrement encombrant une fois démonté. Si le hard-top est destiné à rangé dans le véhicule, il ne peut l'être que dans le coffre à bagages, dont il réduit singulièrement la capacité.

Pour remédier à cet inconvénient, on imaginé des véhicules comportant des toits rigides, dans lesquels une partie coulissante, appelée toit ouvrant, peut être escamotée.

L'inconvénient majeur de tels véhicules est essentiellement la dimension réduite de ces toits ouvrants, la partie coulissante devant nécessairement être rangée dans une partie du toit.

Par ailleurs, la modularité de tous ces véhicules se trouve limitée à celle du toit, mais n'est en aucun cas étendue à un quelconque autre élément de carrosserie.

Pour remédier à ces inconvénients, on alors imaginé un toit comportant une pluralité de lamelles rigides coulissantes, destinées à prendre place dans une cassette de rangement.

Le document FR-A-2.744.957 décrit un tel toit.

Il s'agit d'un toit constitué d'un pavillon réalisé sous la forme de lamelles intégrables dans un caisson et d'une lunette arrière escamotable. La lunette arrière est constituée d'un cadre mobile qui s'étend à proximité du bord de la partie arrière du véhicule jusqu'à la limite arrière du pavillon, dans une position de fermeture de l'habitacle, et à proximité arrière du véhicule jusqu'à l'arrière de la dernière rangée de sièges, dans une position escamotée sensiblement horizontale. Le cadre mobile coopère avec sa partie inférieure avec des dispositifs de basculement de la lunette arrière, qui sont portés par la carrosserie du véhicule.

Un tel toit permet de découvrir une grande partie du toit du véhicule, tout en gardant au pavillon des caractéristiques de rigidité et d'insonorisation satisfaisantes. En revanche, l'ensemble constitué du caisson et de la lunette arrière occupe une partie importante du coffre du véhicule lorsque la lunette arrière est basculée.

Pour remédier à cet inconvénient, l'invention propose un véhicule découvrable dont le toit peut être escamoté de façon compacte.

Dans ce but, l'invention propose un véhicule automobile du type précédemment décrit, caractérisé en ce que le logement, de rangement des lamelles, est agencé dans le panneau inférieur de la porte arrière.

Selon d'autres caractéristiques de l'invention :
- le toit comporte une paire de premières glissières parallèles et opposées, qui sont destinées à recevoir des doigts transversaux des lamelles, et qui s'étendent longitudinalement dans l'épaisseur du toit pour guider les lamelles vers le logement du panneau inférieur,
- l'intérieur du logement du panneau inférieur comporte une paire de deuxièmes glissières internes parallèles et opposées qui, dans la position fermée de la porte arrière, prolongent les premières glissières pour le guidage des doigts des lamelles à l'intérieur du logement,
- la vitre supérieure bloque longitudinalement une lamelle arrière dans une position couverte de l'habitacle, et son bord adjacent au panneau inférieur est articulé autour d'un axe transversal pour permettre à la vitre de basculer vers l'arrière et libérer la lamelle arrière pour le passage de la position couverte à une position découverte de l'habitacle,
- les extrémités opposées de l'axe transversal d'articulation de la vitre supérieure sont reçues dans une paire de troisièmes glissières parallèles et opposées, qui sont parallèles au deuxièmes glissières, et qui s'étendent vers l'intérieur du logement du panneau inférieur, pour permettre à la vitre supérieure de coulisser verticalement dans le logement du panneau inférieur,
- le panneau inférieur de la porte arrière est articulé par rapport à la caisse autour d'un axe vertical agencé le long d'un bord latéral du panneau,
- le véhicule automobile comporte des moyens motorisés pour assurer le coulissement des lamelles et de la vitre supérieure de la porte arrière,
- le véhicule automobile comporte un logement supplémentaire qui est destiné recevoir les lamelles et qui est agencé à l'avant du toit du véhicule,
- les lamelles coulissent au moins dans un plan parallèle à la vitre arrière en avant de celle-ci,
- le pavillon s'étend sur toute la longueur du toit.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe longitudinale partielle de la partie arrière d'un véhicule automobile selon l'invention représenté selon une configuration dans laquelle les lamelles coulissantes ferment l'habitacle ;
- la figure 2 est une vue de détail selon la figure 1 illustrant l'immobilisation des lamelles coulissantes par la vitre supérieure de la porte arrière ;
- la figure 3 est une vue selon la figure 2 dans laquelle la vitre supérieure de la porte arrière libère les lamelles coulissantes ;
- la figure 4 est une vue selon la figure 3 représentant les lamelles en cours de coulissement pour découvrir l'habitacle ;
- la figure 5 est une vue de détail selon la figure 1 illustrant la superposition des lamelles coulissantes ; et
- la figure 6 est une vue en perspective représentant la partie arrière du véhicule automobile dans une configuration dans laquelle les lamelles et la vitre supérieure sont reçues dans le logement du panneau inférieur d'une porte arrière articulée par rapport à la caisse autour d'un axe vertical.

Dans la description qui va suivre, des chiffres de référence identiques désignent des pièces identiques ou ayant des fonctions similaires.

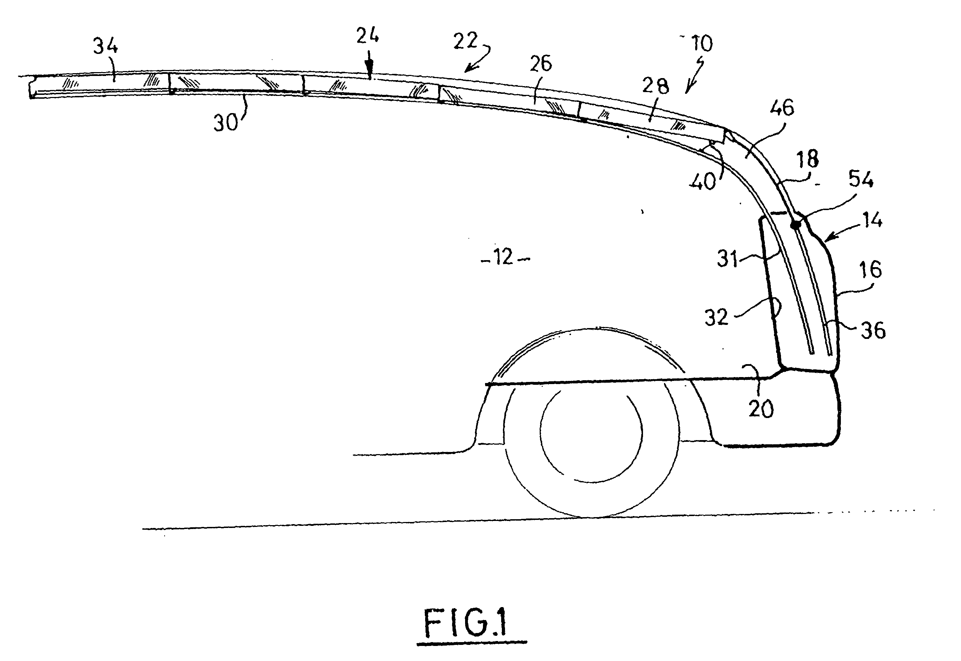

On voit sur la figure 1 l'ensemble de la partie arrière d'un véhicule automobile 10 réalisé conformément à l'invention.

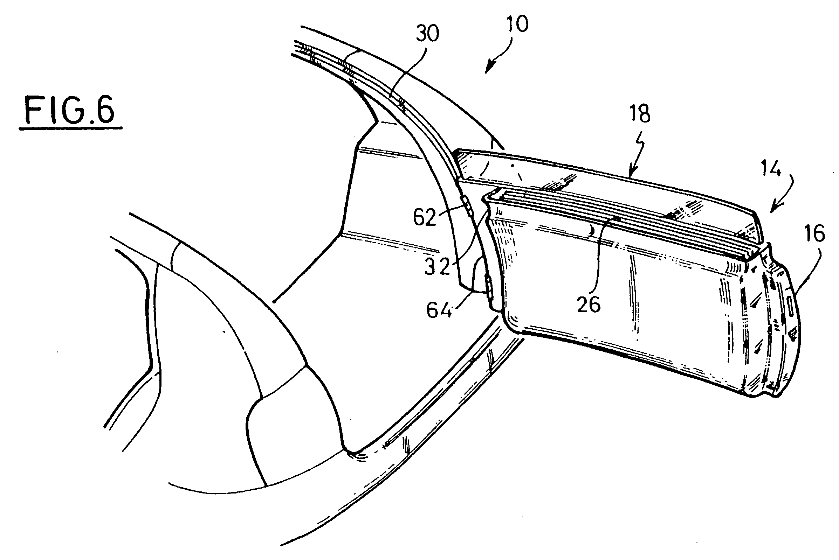

De manière connue, le véhicule automobile 10 comporte un habitacle 12 qui est délimité à l'arrière par une porte transversale 14 qui est composée d'un panneau inférieur 16 surmonté d'une vitre supérieure 18. Le panneau inférieur 16 comporte des moyens pour son articulation par rapport à une caisse 20 du véhicule 10, décrits ultérieurement en référence à la figure 6, et qui permettent l'ouverture de la porte arrière 14.

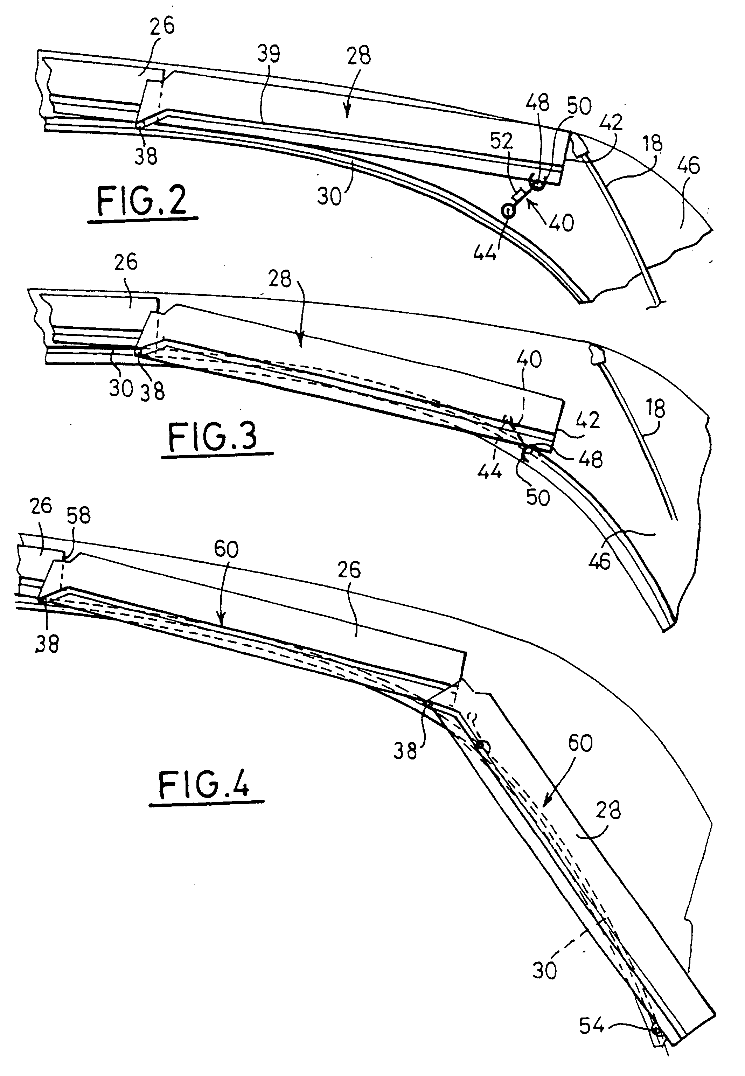

De manière connue, le véhicule comporte un toit 22 qui s'étend de l'avant vers l'arrière du véhicule 10 et qui comporte un pavillon 24. Le pavillon 24 s'étend en avant de la vitre supérieure 18 et il est formé d'une pluralité de lamelles 26 transversales et coulissantes. Les lamelles 26 forment un train ou rideau de lamelles 26 qui sont articulées les unes par rapport aux autres, comme il sera décrit ultérieurement en référence aux figures 2 à 5.

Le train de lamelles 26 comportent notamment une lamelle avant 34 et une lamelle arrière 28.

La lamelle avant 34 est susceptible de pousser d'avant en arrière les lamelles intermédiaires 26 et la lamelle 28 le long d'une paire de premières glissières parallèles et opposées 30 qui s'étendent longitudinalement dans l'épaisseur du toit 22 du véhicule 10, de façon à, comme on le verra en référence aux figures 2 à 5, permettre leur rangement dans un logement 32 du panneau inférieur 16 de la porte arrière 14. Avantageusement, la paire de premières glissières 30 s'étend entre l'avant du toit 22 et le panneau inférieur 16, et elles sont prolongées à l'intérieur du panneau inférieur 16 par une paire de deuxièmes glissières parallèles et opposées 31.

Sur la vue de la figure 1, les lamelles 26 sont représentées dans une position dans laquelle elles ferment l'habitacle 12 du véhicule 10. Les lamelles 26 sont alors sensiblement horizontales et la lamelle arrière 28 est maintenue immobilisée longitudinalement par le bord supérieur de la vitre supérieure 18 de la porte arrière 14. Comme on le verra ultérieurement, la vitre supérieure 18 est escamotable le long d'une paire de troisièmes glissières 36 parallèles et opposées 36 qui s'étend sensiblement verticalement au moins à l'intérieur du logement 32 du panneau inférieur 16, parallèlement en arrière des deuxièmes glissières 31.

Les figures 2 à 4 illustrent plus précisément les différentes phases du coulissement longitudinal du train de lamelles 26.

Comme on le voit à la figure 2, la lamelle arrière 28 est liée et articulée à une lamelle 26 par l'intermédiaire d'un axe de liaison 38 qui s'étend sensiblement transversalement entre les deux lamelles adjacentes 26 et 28. Chaque lamelle 26 est articulée de la même manière sur la lamelle 26 ou 34 située immédiatement à l'avant de la lamelle 26 considérée. L'axe de liaison et d'articulation 38 est fixé à l'arrière de chaque lamelle 26 ou 34 et il est reçu dans une lumière 39 de la lamelle 26 ou 28 située à l'arrière de la lamelle 34 ou 26 considérée. Chaque lumière 39 s'étend dans l'épaisseur de la lamelle 26 ou 28 considérée, parallèlement au plan général de la lamelle 26 ou 28 considérée. Chaque lumière 39 est, à l'avant de la lamelle 26 ou 28 considérée, légèrement inclinée vers la glissière 30 pour permettre le chevauchement et la superposition des lamelles 26, 28 et 34 dans le logement 32 du panneau inférieur 16, lorsque l'axe intermédiaire 38 coulisse dans la lumière 39 considérée.

Par ailleurs, des extrémités transversales opposées (non représentées) conformées en doigts des axes intermédiaires 38 sont reçues dans la paire de premières glissières 30 parallèles et opposées.

Dans la position de fermeture du pavillon 24 du véhicule 10 représentée à la figure 2, la lamelle arrière 28 repose à l'avant sur la glissière 30 par l'intermédiaire des doigts transversaux de l'axe intermédiaire 38, et à l'arrière simultanément sur la vitre supérieure 18 et sur des biellettes 40. Une face arrière 42 de la lamelle arrière 28 est maintenue en butée longitudinale vers l'arrière contre la vitre supérieure 18 et des doigts (non représentés) de l'axe transversal 38, qui est situé à l'arrière de la lamelle arrière 28, sont reçus dans des fourches 48 des biellettes 40.

Chaque biellette 40 est articulée à l'opposé de la fourche 48 par l'intermédiaire d'un pivot 44 sur un montant latéral 46 de la caisse 20 du véhicule 10, visible à la figure 1.

Dans la position de la figure 2, la biellette 40 est maintenue dans une position sensiblement verticale par la lamelle arrière 28, qui est immobilisée par la vitre supérieure 18. La biellette est immobilisée en rotation vers l'avant par une butée 52 qui est agencée à l'avant de celle-ci de façon à prendre appui sur le corps de la biellette 40.

De la sorte, la lamelle 28 est immobilisée longitudinalement dans les deux directions longitudinales arrière et avant, d'une part par la vitre supérieure 18 dans la direction de l'arrière du véhicule, et d'autre part par le doigt transversal 50 qui reçu dans la fourche 48 de la biellette 40 qui est en butée contre la butée 52.

Comme l'illustre la figure 3, lorsque l'on désire ouvrir le pavillon 24 du toit 22 du véhicule 10, la vitre supérieure 18 est écartée vers l'arrière de la face arrière 42 de la lamelle 28 à l'aide des moyens motorisés (non représentés). A cet effet, la vitre arrière 18 est par exemple articulée autour d'un axe transversal de rotation 54, visible à la figure 1. Ainsi, la vitre supérieure 18 peut basculer vers l'arrière et relâcher l'effort de retenue qu'elle exerce sur la face arrière 42 de la lamelle 28. De la sorte, la lamelle arrière 28 est libérée et son axe 38 "retombe" sur la paire de première glissières 30 en entraînant les biellettes 40 qui pivotent autour des pivots 44. Le train de lamelles 26 est alors à même de coulisser librement vers l'arrière.

Ainsi, comme on le voit sur la figure 2, la biellette 40 retombe au niveau de la paire de première glissières 30 et les doigts transversaux 50 de l'axe transversal 38 de la lamelle arrière 28 peuvent s'échapper hors de la fourche 48 de la biellette 40. De la sorte, la lamelle arrière 28 peut coulisser le long de la première paire de glissières 30 avec le train de lamelles 26.

Avantageusement, on notera que les axes intermédiaires d'articulation 38 des lamelles 34, 26 et 26, 28 permettent au train de lamelles 26, 28 et 34 de se déformer globalement en épousant sensiblement la courbure de la paire de premières glissières 30.

Cette configuration est représentée à la figure 4 dans laquelle les lamelles 28, 26 et 34 descendent le long de la paire de premières glissières 30 en direction du logement 32 du panneau inférieur 16, précédemment décrit en référence à la figure 1. Les lamelles 28, 26 et 34 étant articulées les unes par rapport aux autres, le mouvement global du train de lamelles peut donc s'effectuer sans rencontrer une quelconque résistance de torsion du train de lamelles.

Comme l'illustre la figure 4, la vitre arrière 18 a été escamotée dans le logement 32 précédemment décrit en référence à la figure 1. Son axe d'articulation 54 comporte des doigts transversaux qui ont coulissé le long de la paire de troisièmes glissières 36 en entraînant la vitre supérieure 18, de façon à permettre notamment le passage du train de lamelles 26. Cette configuration n'est pas limitative de l'invention et il suffit que la vitre supérieure 18 ait une courbure légèrement différente pour qu'il ne soit pas nécessaire descendre la vitre supérieure 18 pour faciliter le passage du train de lamelles. Dans ce cas, la vitre supérieure 18 peut être maintenue en position haute ou sortie et elle forme alors avantageusement une protection pour éviter qu'un corps étranger ne vienne perturber le coulissement des lamelles 26.

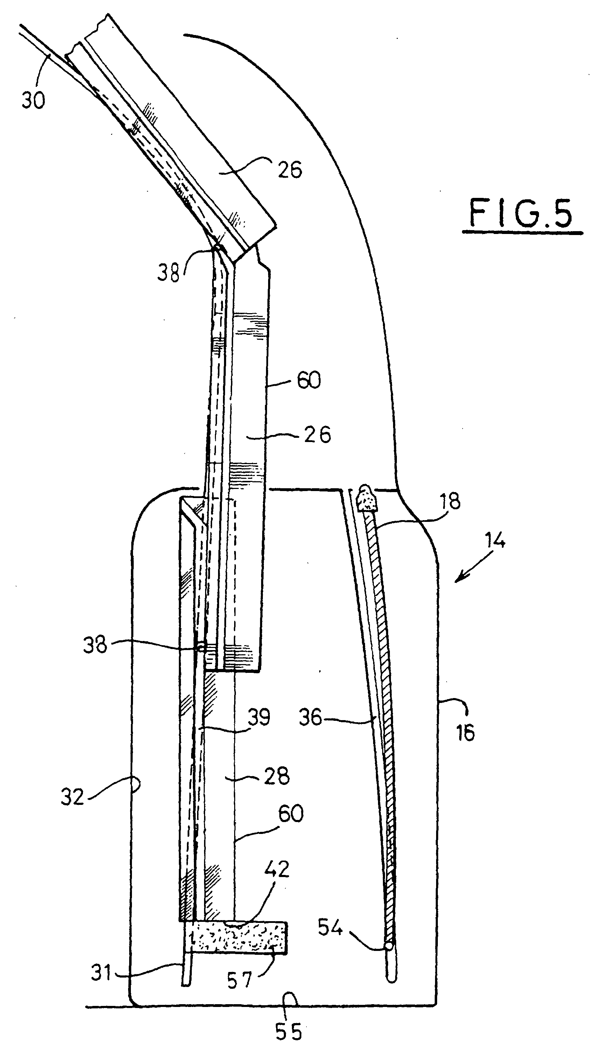

La figure 5 illustre une configuration dans laquelle la lamelle arrière 28, après avoir quitté la paire de premières glissières 30 et coulissé le long de la paire de deuxièmes glissières 31, est parvenue dans le logement 32 du panneau inférieur 16 de la porte arrière 14. Dans cette configuration, la lamelle arrière 28, qui est située "en tête" du train de lamelles, est reçue en butée contre des moyens de butée 57 réalisés, par exemple, sous la forme d'un bloc en matériau élastomère agencé au fond 55 du logement 32 pour recevoir en butée la face ou bord arrière 42 de la lamelle arrière 28.

La lamelle 26 qui suit immédiatement la lamelle arrière 28 peut alors chevaucher la lamelle arrière 28. En effet, l'axe transversal intermédiaire 38 d'articulation entre les deux lamelles consécutives 26, 28 peut coulisser dans la lumière 39 de la lamelle arrière pour permettre le coulissement de la lamelle 26 en chevauchement par rapport à la lamelle arrière 28.

En effet, comme on peut le voir notamment à la figure 4, l'avant 58 de chaque lamelle 26 est conformé sensiblement en forme de pente ou chanfrein afin que la lamelle suivante 26 "monte" sur un dos 60 de la lamelle arrière 28. De la même manière, chaque lamelle 26 glisse sur le dos 60 de la lamelle précédente. Les lamelles 26 se rangent ainsi progressivement en se chevauchant successivement d'avant en arrière dans le logement 32, comme l'illustre la figure 5.

Cette possibilité de rangement des lamelles 28, 26 et 34 dans le logement 32 du panneau inférieur 16 de la porte 14 est particulièrement avantageux du fait du prolongement de la paire de premières glissières 30 par la paire de deuxièmes glissières 31. En effet, lorsque toutes les lamelles 28, 26 et 34 ont été escamotées dans le logement 32 du panneau inférieur 16, il est possible d'ouvrir la porte arrière 14 comme représenté à la figure 6.

Dans le mode de réalisation préféré de l'invention, le panneau inférieur 16 de la porte arrière 14 est articulé autour d'un axe vertical qui est réalisé ici sous la forme de deux pivots 62 agencés le long d'un bord latéral 64 du panneau inférieur 16. Ainsi, lorsque la porte arrière 14 est ouverte, la paire de deuxièmes glissières 31 précédemment décrite quitte le prolongement de la paire de premières glissières 30.

Les opérations permettant de rétablir une position couverte du véhicule 10 sont les mêmes que celles permettant d'amener le véhicule 10 en position découverte, mais elles sont effectuées en sens inverse. Dans ce cas, le train de lamelles 34, 26 et 28 remonte le long des paires de deuxièmes et premières glissières 31 puis 30, la lamelle avant 34 tirant le train de lamelles jusqu'à ce que les doigts transversaux 50 de la lamelle arrière 28 soit à nouveau reçus dans la fourche 48 de la biellette 40 précédemment décrite en référence aux figures 1 à 4, et que l'effort de traction de la lamelle avant 34 exercé sur le train de lamelles 26 permette à la biellette 40 de remonter la lamelle arrière 28 dans la position dans laquelle elle peut à nouveau être immobilisée par la vitre supérieure 18.

Avantageusement, le véhicule 10 peut comporter sur son toit 22 un logement supplémentaire (non représenté) permettant le rangement des lamelles à l'avant du toit 22 du véhicule 10.

L'invention permet donc de disposer d'un véhicule 10 de grande modularité, disposant d'un pavillon 22 rigide mais escamotable, réalisé avec des moyens simples et fiables.

## Revendications

1. Véhicule automobile (10) dont l'habitacle (12) est délimité par au moins une porte (14) agencée transversalement à l'arrière de la caisse (20) du véhicule, du type dans lequel la porte (14) arrière comporte un panneau inférieur (16) surmonté d'une vitre supérieure (18) et des moyens d'articulation (62) du panneau inférieur (16) par rapport à la caisse (20) du véhicule (10) qui permettent l'ouverture de la porte arrière (14), du type dans lequel au moins une partie d'un toit (22) de l'habitacle (12) est constituée d'un pavillon (24) qui s'étend sensiblement horizontalement en avant de la vitre supérieure (18) de la porte arrière (14) et qui est formé d'une pluralité de lamelles (26) transversales, notamment articulées les unes par rapport aux autres, qui sont susceptibles d'être entraînées, notamment par une lamelle avant (34), pour coulisser longitudinalement, notamment vers l'arrière et découvrir au moins partiellement l'habitacle (12) du véhicule (10), et qui sont susceptibles d'être reçues, notamment en se superposant les unes sur les autres, dans un logement (32) agencé en arrière du toit (22), **caractérisé en ce que** le logement (32) est agencé dans le panneau inférieur (16) de la porte arrière (14).

2. Véhicule automobile (10) selon la revendication 1, **caractérisé en ce que** le toit (22) comporte une paire de premières glissières parallèles (30) et opposées qui sont destinées à recevoir des doigts transversaux des lamelles (26) et qui s'étendent longitudinalement dans l'épaisseur du toit (22) pour guider les lamelles (26, 28, 34) vers le logement (32) du panneau inférieur (16).

3. Véhicule automobile (10) selon la revendication 2, **caractérisé en ce que** l'intérieur du logement (32) du panneau inférieur (16) comporte une paire de deuxièmes glissières (31) internes parallèles et opposées qui, dans la position fermée de la porte arrière (14), prolongent les premières glissières (30) pour le guidage des doigts des lamelles (26, 28, 34) à l'intérieur du logement (32).

4. Véhicule automobile (10) selon l'une quelconque des revendications précédentes, **caractérisé en ce que** la vitre supérieure (18) bloque longitudinalement une lamelle arrière (28) dans une position couverte de l'habitacle (12), et **en ce que** son bord adjacent au panneau inférieur (16) est articulé autour d'un axe transversal (54) pour permettre à la vitre (18) de basculer vers l'arrière et libérer la lamelle arrière (28) pour le passage de la position couverte à une position découverte de l'habitacle (12).

5. Véhicule automobile (10) selon la revendication 4, **caractérisé en ce que** les extrémités opposées de l'axe transversal (50) d'articulation de la vitre supérieure sont reçues dans une paire de troisièmes glissières (36) parallèles et opposées, qui sont parallèles au deuxièmes glissières (31), et qui s'étendent vers l'intérieur du logement (32) du panneau inférieur (16), pour permettre à la vitre supérieure (18) de coulisser verticalement dans le logement (32) du panneau inférieur (16).

6. Véhicule automobile (10) selon l'une quelconque des revendications précédentes, **caractérisé en ce que** le panneau inférieur (16) de la porte arrière est articulé par rapport à la caisse autour d'un axe vertical (62) agencé le long d'un bord latéral (64) du panneau (16).

7. Véhicule automobile (10) selon l'une quelconque des revendications précédentes, **caractérisé en ce qu'**il comporte des moyens motorisés pour assurer le coulissement des lamelles (26, 28, 34) et de la vitre supérieure (18) de la porte arrière (14).

8. Véhicule automobile (10) selon l'une quelconque des revendications précédentes, **caractérisé en ce qu'**il comporte une logement supplémentaire qui est destiné recevoir les lamelles (26, 28, 34) et qui est agencé à l'avant du toit (22) du véhicule (10).

9. Véhicule automobile (10) l'une quelconque des revendications 5 à 8, **caractérisé en ce que** les lamelles (26, 28, 34) coulissent au moins dans un plan parallèle à la vitre arrière (18) en avant de celle-ci.

10. Véhicule automobile (10) selon l'une quelconque des revendications précédentes, **caractérisé en ce que** le pavillon (24) s'étend sur toute la longueur du toit (22).

## Patentansprüche

1. Kraftfahrzeug (10), dessen Fahrgastzelle (12) durch wenigstens eine Tür (14) begrenzt ist, welche transversal am hinteren Ende des Gehäuses (20) des Fahrzeugs angeordnet ist, von dem Typ, in welchem die hintere Tür (14) eine untere Platte (16) umfasst, welche von einer oberen Scheibe (18) überstiegen wird, und Mittel zur gelenkigen Befestigungen (62) der unteren Platte (16) im Verhältnis zum Gehäuse (20) des Fahrzeugs (10), welche das Öffnen der hinteren Tür (14) erlauben, von dem Typ, in welchem wenigstens ein Teil eines Dachs (22) der Fahrgastzelle (12) aus einem Zeltdach (24) gebildet ist, welches sich im Wesentlichen horizontal vor der oberen Scheibe (18) der hinteren Tür (14) erstreckt und welches aus einer Vielzahl aus transversalen Lamellen (26) gebildet ist, insbesondere im Verhältnis zueinander gelenkig verbunden, welche geeignet sind, mitgezogen zu werden, insbesondere durch eine vordere Lamelle (34), um longitudinal zu gleiten, insbesondere nach hinten und die Fahrgastzelle (12) des Fahrzeugs (10) wenigstens teilweise freizumachen, und welche geeignet sind, aufgenommen zu werden, insbesondere, in dem sie sich übereinander legen, in einer Unterbringung (32), welche hinter dem Dach (22) angeordnet ist, **dadurch gekennzeichnet, dass** die Unterbringung (32) in der unteren Platte (16) der hinteren Tür (14) angeordnet ist.

2. Kraftfahrzeug (10) nach Anspruch 1, **dadurch gekennzeichnet, dass** das Dach (22) ein Paar von parallelen und gegenüberliegenden ersten Gleitschienen (30) umfasst, die dazu bestimmt sind, die transversalen Zapfen der Lamellen (26) zu empfangen und welche sich longitudinal in der Dicke des Dachs (22) erstrecken, um die Lamellen (26, 28, 34) zu der Unterbringung (22) der unteren Platte (16) zu führen.

3. Kraftfahrzeug (10) nach Anspruch 2, **dadurch gekennzeichnet, dass** das Innere der Unterbringung (32) der unteren Platte (16) ein Paar von inneren, parallelen und gegenüberliegenden zweiten Gleitschienen (31) umfasst, welche in der geschlossenen Position der hinteren Tür (14) die ersten Gleitschienen (30) verlängern, für die Führung der Zapfen der Lamellen (26, 28, 34) im Inneren der Unterbringung (32).

4. Kraftfahrzeug nach einem der vorhergehenden Ansprüche, **dadurch gekennzeichnet, dass** die obere Scheibe (18) longitudinal eine hintere Lamelle (28) in einer geschlossenen Position der Fahrgastzelle (12) blockiert, und dadurch, dass ihr der unteren Platte (16) benachbarter Rand gelenkig um eine transversale Achse (54) befestigt ist, um der Scheibe (18) zu erlauben, nach hinten zu klappen und die hintere Lamelle (28) für den Wechsel aus der geschlossenen Position in eine Position freizugeben, in der die Fahrgastzelle (12) freigemacht ist.

5. Kraftfahrzeug (10) nach Anspruch 4, **dadurch gekennzeichnet, dass** die gegenüberliegenden Enden der transversalen Gelenkachse (50) der oberen Scheibe in einem Paar von parallelen und gegenüberliegenden dritten Gleitschienen (36) aufgenommen werden, welche parallel zu den zweiten Gleitschienen (31) sind, und welche sich zum Inneren der Unterbringung (32) der unteren Platte (16) erstrecken, um der oberen Scheibe (18) zu erlauben, vertikal in die Unterbringung (32) der unteren Platte (16) zu gleiten.

6. Kraftfahrzeug (10) nach einem der vorhergehenden Ansprüche, **dadurch gekennzeichnet, dass** die untere Platte (16) der hinteren Tür gelenkig angebracht im Verhältnis zum Gehäuse um eine vertikale Achse (62) ist, welche entlang eines seitlichen Randes (64) der Platte (16) angeordnet ist.

7. Kraftfahrzeug (10) nach einem der vorhergehenden Ansprüche, **dadurch gekennzeichnet, dass** es motorisierte Mittel zum Sicherstellen des Gleitens der Lamellen (26, 28, 34) und der oberen Scheibe (18) der hinteren Tür ( 14) umfasst.

8. Kraftfahrzeug (10) nach einem der vorhergehenden Ansprüche, **dadurch gekennzeichnet, dass** es eine zusätzliche Unterbringung umfasst, die dazu bestimmt ist, die Lamellen (26, 28, 34) aufzunehmen, und welche am vorderen Ende des Dachs (22) des Fahrzeugs (10) angeordnet ist.

9. Kraftfahrzeug (10) nach einem der Ansprüche 5 bis 8, **dadurch gekennzeichnet, dass** die Lamellen (26, 28, 34) wenigstens in einer zur oberen Scheibe (18) parallelen Ebene vor derselben gleiten.

10. Kraftfahrzeug (10) nach einem der vorhergehenden Ansprüche, **dadurch gekennzeichnet, dass** das Zeltdach (24) sich über die gesamte Länge des Dachs (22) erstreckt.

## Claims

1. A motor vehicle (10) of which the passenger compartment (12) is delimited by at least one door (14) arranged transversely at the rear of the body (20) of the vehicle, of the type in which the rear door (14) comprises a lower panel (16) surmounted by an upper window (18) and means (62) for pivotal mounting of the lower panel (16) with respect to the body (20) of the vehicle (10), which means permit opening of the rear door (14), of the type in which at least a part of a roof (22) of the passenger compartment (12) is formed by an openable roof head (24) which extends substantially horizontally in front of the upper window (18) of the rear door (14) and which is formed by a plurality of transverse slats (26) which in particular are pivotably connected relative to each other and which are capable of being entrained, in particular by a front slat (34), to slide longitudinally, in particular towards the rear, and uncover at least partially the passenger compartment (12) of the vehicle (10) and which are capable of being received, in particular in mutually superposed relationship, in a housing (32) arranged at the rear of the roof (22), **characterised in that** the housing (32) is arranged in the lower panel (16) of the rear door (14).

2. A motor vehicle (10) according to claim 1 **characterised in that** the roof (22) comprises a pair of first parallel and opposite slideways (30) which are intended to receive transverse fingers on the slats (26) and which extend longitudinally in the thickness of the roof (22) to guide the slats (26, 28, 34) towards the housing (32) of the lower panel (16).

3. A motor vehicle (10) according to claim 2 **characterised in that** the interior of the housing (32) of the lower panel (16) comprises a pair of second internal parallel and opposite slideways (31) which in the closed position of the rear door (14) prolong the first slideways (30) for guiding the fingers of the slats (26, 28, 34) in the interior of the housing (32).

4. A motor vehicle (10) according to any one of the preceding claims **characterised in that** the upper window (18) longitudinally blocks a rear slat (28) in a covered position of the passenger compartment (12) and that its edge adjacent to the lower panel (16) is pivoted about a transverse axis (54) to permit the window (18) to pivot rearwardly and free the rear slat (28) for movement from the covered position to an uncovered position of the passenger compartment (12).

5. A motor vehicle (10) according to claim 4 **characterised in that** the opposite ends of the transverse spindle (50) for pivotal mounting of the upper window are received in a pair of third parallel and opposite slideways (36) which are parallel to the second slideways (31) and which extend towards the interior of the housing (32) of the lower panel (16) to permit the upper window (18) to slide vertically into the housing (32) of the lower panel (16).

6. A motor vehicle (10) according to any one of the preceding claims **characterised in that** the lower panel (16) of the rear door is pivoted with respect to the body about a vertical axis (62) arranged along a lateral edge (64) of the panel (16).

7. A motor vehicle (10) according to any one of the preceding claims **characterised in that** it comprises motor means for producing the sliding movement of the slats (26, 28, 34) and the upper window (18) of the rear door (14).

8. A motor vehicle (10) according to any one of the preceding claims **characterised in that** it comprises an additional housing which is intended to receive the slats (26, 28, 34) and which is arranged at the front of the roof (22) of the vehicle (10).

9. A motor vehicle (10) according to any one of claims 5 to 8 **characterised in that** the slats (26, 28, 34) slide at least in a plane parallel to the rear window (18) in front thereof.

10. A motor vehicle (10) according to any one of the preceding claims **characterised in that** the openable roof head (24) extends over the entire length of the roof (22).
